# FASCICULE DE BREVET EUROPEEN

(11) **EP 2 356 356 B1**
(45) Date de publication et mention de la délivrance du brevet: **20.03.2013**
(21) Numéro de dépôt: 09801513.4
(22) Date de dépôt: 08.12.2009
(51) Int. Cl.: F16K 1/44, F16K 11/20

(54) **VANNE POUR LA PROJECTION DE PRODUIT DE REVETEMENT ET PROJECTEUR COMPORTANT UNE TELLE VANNE**
VENTIL ZUM SPRITZEN VON BESCHICHTUNGSMATERIAL UND SPRITZPISTOLE MIT EINEM SOLCHEN VENTIL.
VALVE FOR SPRAYING COATING PRODUCT AND SPRAYGUN COMPRISING SUCH A VALVE.

(30) Priorité: 09.12.2008 FR 0858413
(43) Date de publication de la demande: 17.08.2011
(73) Titulaire: SAMES Technologies, 38240 Meylan (FR)
(72) Inventeur: ROBERT, Stéphane, F-38240 Meylan (FR)
(74) Mandataire: Myon, Gérard Jean-Pierre
(86) Numéro de dépôt international: PCT/FR2009/052454
(87) Numéro de publication internationale: WO 2010/067016

(56) Documents cités:
- DE-A1- 3 331 840
- DE-A1- 4 236 464
- US-A- 4 458 543
- US-A- 4 582 224
- US-A- 5 301 714
- US-B1- 6 439 479

## Description

La présente invention concerne une vanne pour la projection de produit de revêtement, ainsi qu'un un projecteur comportant une telle vanne.

EP-A-0 274 322 décrit une installation de projection de produit de revêtement sur des objets à revêtir, dans laquelle un robot multiaxes déplace un projecteur de produit de revêtement en regard d'objets à revêtir. Dans l'exemple décrit ci-après, le produit de revêtement est un apprêt, une peinture ou un vernis et les objets à revêtir sont des carrosseries de véhicules automobiles transportés par un convoyeur.

Le projecteur est équipé d'un réservoir contenant le volume de peinture nécessaire pour réaliser la phase de projection de peinture sur la carrosserie. Après cette phase, il faut remplir à nouveau ce réservoir en raccordant le projecteur à un circuit de peinture présélectionné, parfois dénommé *« circulating* ». Quand on remplit à nouveau le réservoir, il faut souvent changer de produit de revêtement, notamment pour changer la teinte de peinture. Il faut donc nettoyer le réservoir et les canalisations du projecteur, ainsi que les zones de raccordement, en les rinçant avec un produit de nettoyage, tel qu'un solvant.

C'est pourquoi une installation de projection de peinture de l'art antérieur comprend généralement au moins deux moyens de raccordement distincts placés entre le projecteur et respectivement le circuit de peinture et le circuit de solvant. Ces moyens de raccordement comprennent notamment deux vannes distinctes montées sur et/ou dans le projecteur pour commander respectivement et successivement l'écoulement de solvant et l'écoulement de peinture. Pendant la phase de nettoyage, il faut en outre collecter les déchets de solvant et de peinture résiduels pour les acheminer vers une unité de traitement, ce qui nécessite une vanne supplémentaire. Cela nécessite d'autant plus de composants et d'organes de commande pour actionner les diverses vannes.

Cependant, ces vannes juxtaposées dans le projecteur représentent un encombrement important, quelles que soient leurs dimensions respectives. Cet encombrement augmente l'encombrement du projecteur et complexifie sa structure. De plus, cet encombrement réduit l'accès aux autres composants du projecteur lors des opérations de maintenance.

En outre, ces trois vannes sont reliées par un réseau de canalisations communes, notamment pour permettre le rinçage de la vanne et des conduits pour l'écoulement de peinture vers le réservoir. Or, le volume de ces canalisations communes est rempli, d'une part, de peinture pour les phases de remplissage du réservoir et de projection et, d'autre part, rempli de solvant pour la phase de nettoyage, si bien que ce volume implique des pertes de peinture et une consommation de solvant relativement élevées. Ces pertes de peinture interviennent aussi quand on remplit à nouveau le réservoir sans changer la teinte de peinture. DE 3331840 décrit une vanne selon le préambule de la revendication 1.

La présente invention vise notamment à remédier à ces inconvénients, en proposant une vanne compacte, qui réduit sensiblement les pertes de peinture et la consommation de solvant et qui simplifie la structure du projecteur.

A cet effet, l'invention a pour objet une vanne comprenant :
- un corps ;
- au moins un premier conduit pour canaliser l'écoulement d'un fluide ;
- au moins un deuxième conduit pour canaliser l'écoulement d'un fluide ;
- un premier pointeau mobile en translation, suivant une première direction, entre une position d'ouverture et une position d'obturation du ou de chaque premier conduit, le corps formant un premier siège pour le premier pointeau ; et
- un deuxième pointeau mobile en translation, suivant une deuxième direction, entre une position d'ouverture et une position d'obturation du ou de chaque deuxième conduit;
- dans laquelle la première direction et la deuxième direction sont parallèles ou confondues, alors que le premier pointeau définit un logement pour le deuxième pointeau que le premier pointeau forme un deuxième siège pour le deuxième pointeau et que le corps définit le premier conduit et le deuxième pointeau présente une cavité interne formant une partie du deuxième conduit.

Cette vanne est caractérisée en ce que :
- le corps présente une ouverture commune au premier conduit et au deuxième conduit ;
- les surfaces axiales terminales respectives du premier pointeau et du deuxième pointeau affleurent ladite ouverture. Selon d'autres caractéristiques avantageuses mais facultatives de l'invention, prises isolément ou selon toute combinaison techniquement admissible :
- le premier pointeau et le deuxième pointeau présentent chacun une symétrie de révolution respectivement autour de la première direction et de la deuxième direction et le premier pointeau et le deuxième pointeau sont agencés de façon coaxiale ;
- la vanne comprend en outre au moins un organe élastique pour rappeler le premier pointeau et le deuxième pointeau dans leurs positions respectives d'obturation du premier conduit et du deuxième conduit et le premier pointeau et le deuxième pointeau présentent respectivement des surfaces de poussée agencées de façon à transmettre des efforts de poussée exercés par un fluide de poussée, tel que de l'air comprimé, suivant la première direction ou la deuxième direction à l'encontre de l'organe élastique ;
- au moins un organe élastique est formé par un ressort multispire crête-à-crête ;
- le premier conduit s'étend sensiblement transversalement au deuxième conduit ;
- le premier conduit et le deuxième conduit sont agencés pour recevoir un premier type de fluide, tel qu'un produit de nettoyage, ou un deuxième type de fluide, tel qu'un produit de revêtement ;
- le premier siège et le deuxième siège ont des formes tronconiques ;
- le premier pointeau et le deuxième pointeau présentent des surfaces mouillées sensiblement tangentes localement aux lignes de courant des fluides, de façon à limiter la rétention de fluide.

D'autre part, l'invention a pour objet un projecteur de produit de revêtement qui comprend une vanne tel qu'exposée ci-dessus.

L'invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une coupe d'une vanne conforme à un premier mode de réalisation de l'invention ;
- la figure 2 est une coupe d'une vanne conforme à un deuxième mode de réalisation de l'invention ;
- la figure 3 est une coupe analogue à la figure 1 d'une vanne conforme à un troisième mode de réalisation de l'invention ;
- les figures 4 et 5 sont des coupes, à plus petite échelle, de la vanne de la figure 2 placée dans des configurations d'ouverture ;
- les figures 6 et 7 sont des coupes, à plus petite échelle, de la vanne de la figure 3 placée dans des configurations d'ouverture ; et
- la figure 8 est une vue en coupe partielle d'un projecteur conforme à l'invention.

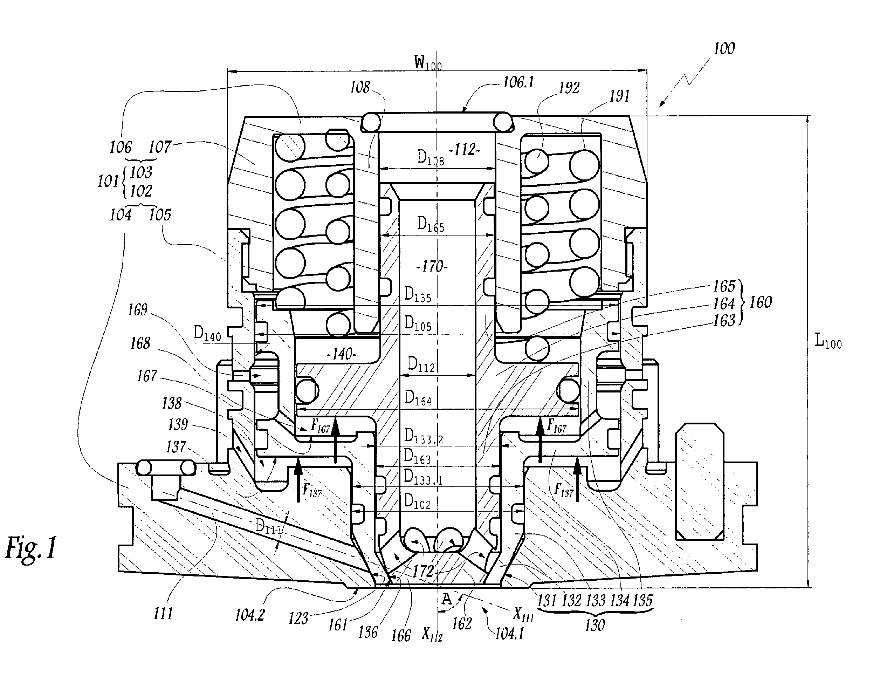

La figure 1 montre une vanne 100 comprenant un corps 101, un premier conduit 111 et un deuxième conduit 112 distinct, dans lesquels peuvent s'écouler des fluides mis en oeuvre au cours des phases de remplissage, projection et de nettoyage, par exemple de la peinture, du solvant et de l'air comprimé.

La vanne 100 comprend en outre un premier pointeau 130 et un deuxième pointeau 160, qui ont pour fonction d'autoriser ou non les écoulements de ces fluides. Le corps 101 loge le premier pointeau 130 et le deuxième pointeau 160. De plus, le premier pointeau 130 définit un logement 140 adapté pour recevoir une partie substantielle du deuxième pointeau 160.

Le corps 101 est composé d'un demi-corps amont 102 et d'un demi-corps aval 103. Le demi-corps amont 102 est formé essentiellement de la réunion d'un flasque amont 104 et d'une paroi cylindrique amont 105. Le demi-corps aval 103 est formé essentiellement d'un flasque aval 106 et d'une paroi cylindrique aval 107. Les flasques amont 104 et aval 106 sont globalement en forme de disques. Les flasques amont 104 et aval 106 sont respectivement percés d'une ouverture amont 104.1 et d'une ouverture aval 106.1. Les ouvertures amont 104.1 et aval 106.1 sont de forme circulaire et permettent le passage des fluides à travers le premier conduit 111 et le deuxième conduit 112, comme cela est détaillé ci-après.

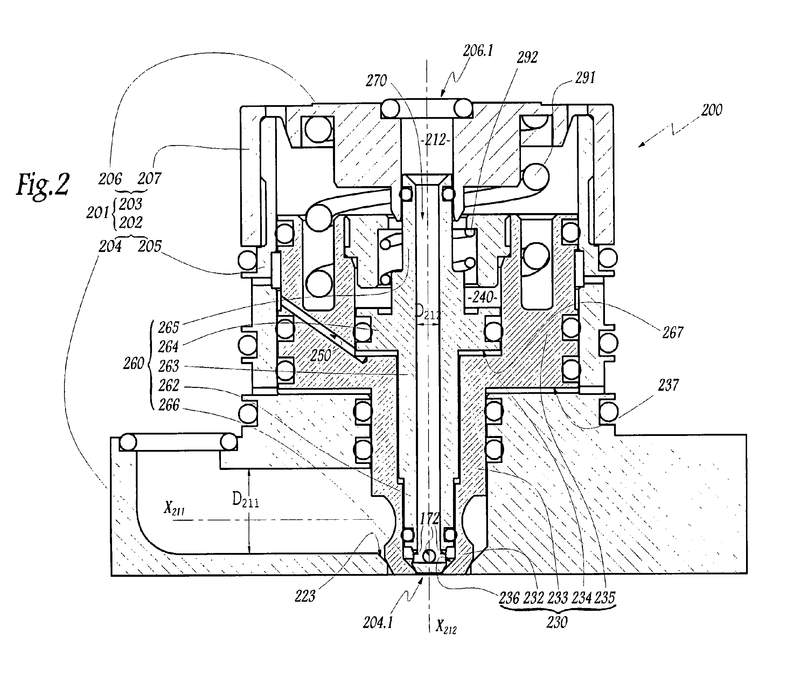

Les demi-corps amont 102 et aval 103 sont assemblés par la fixation mutuelle des parois cylindriques amont 105 et aval 107. La fixation des parois cylindriques amont 105 et aval 107 peut résulter d'un clipsage ou d'un vissage, comme pour les premier et deuxième modes de réalisation illustrés aux figures 1 et 2, ou de tout autre moyen de fixation équivalent.

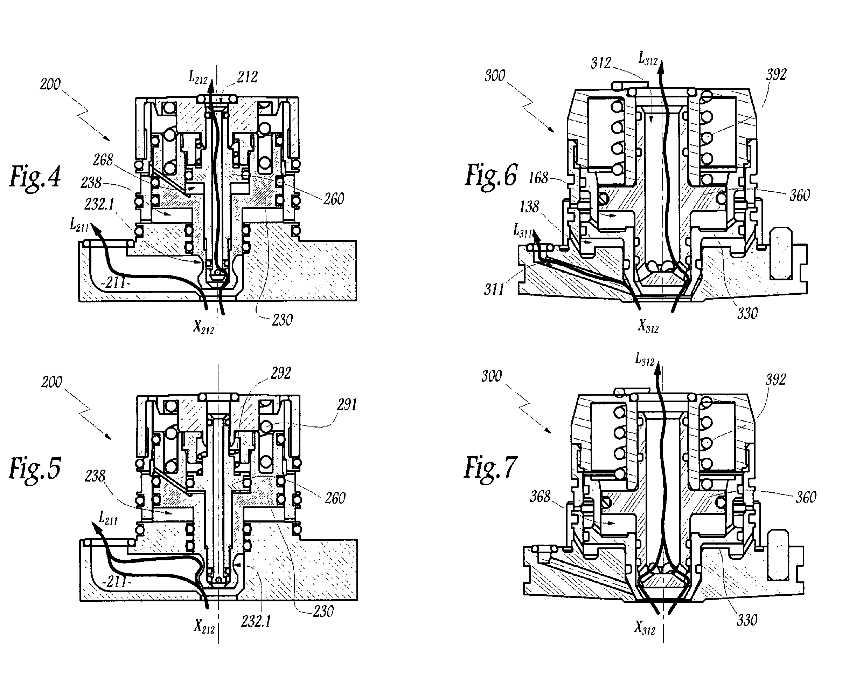

Dans la présente demande, les termes « amont » et « aval » sont employés par référence au sens général d'écoulement des fluides dans le premier conduit 111 et dans le deuxième conduit 112. Ces écoulements sont représentés aux figures 4 à 7 par des lignes de courant L₂₁₁, L₂₁₂, L₃₁₁ et L₃₁₂.

Le premier pointeau 130 est mobile en translation suivant une première direction matérialisée par un axe X₁₁₂ qui est vertical sur la figure 1. Le deuxième pointeau 160 est mobile en translation suivant une deuxième direction qui est aussi matérialisée par l'axe X₁₁₂. En d'autres termes, la première direction et la deuxième direction, suivant lesquelles se déplacent respectivement le premier pointeau 130 et le deuxième pointeau 160, sont colinéaires et confondues en un axe X₁₁₂.

Le premier pointeau 130 est mobile entre une position d'ouverture et une position d'obturation du premier conduit 111. Le deuxième pointeau 160 est mobile entre une position d'ouverture et une position d'obturation du deuxième conduit 112. La figure 1 illustre la vanne 100 placée dans sa configuration d'obturation, avec les positions d'obturation respectives du premier pointeau 130 et du deuxième pointeau 160. En d'autres termes, sur la figure 1, le premier pointeau 130 et le deuxième pointeau 160 sont dans leurs positions d'obturation respectives du premier conduit 111 et du deuxième conduit 112. Dans la configuration illustrée à la figure 1, aucun fluide ne peut s'écouler dans le premier conduit 111 ni dans le deuxième conduit 112.

Le premier pointeau 130 est composé d'un premier embout amont 132 de forme tronconique, d'un premier cylindre amont 133, d'une première couronne 134 et d'un premier cylindre aval 135. L'axe X₁₁₂ est commun au premier embout amont 132, au premier cylindre amont 133, à la première couronne 134 et au premier cylindre aval 135. Le premier pointeau 130 présente donc une symétrie de révolution autour de la première direction de translation que constitue l'axe X₁₁₂. Le premier pointeau 130 est creux. Plus précisément, le premier embout amont 132, le premier cylindre amont 133, la première couronne 134 et le premier cylindre aval 135 ont des régions centrales creuses qui communiquent entre elles.

Le deuxième pointeau 160 est composé d'un deuxième embout amont 162 de forme tronconique, d'un deuxième cylindre amont 163, d'une deuxième couronne 164 et d'un deuxième cylindre aval 165. L'axe X₁₁₂ est commun au deuxième embout amont 162, au deuxième cylindre amont 163, à la deuxième couronne 164 et au deuxième cylindre aval 165. Le deuxième pointeau 160 présente donc une symétrie de révolution autour de la deuxième direction de translation que constitue l'axe X₁₁₂. Le deuxième pointeau 160 est creux. Plus précisément, le deuxième embout amont 162, le deuxième cylindre amont 163, la deuxième couronne 164 et le deuxième cylindre aval 165 ont des régions centrales creuses qui communiquent entre elles.

Le premier pointeau 130 et le deuxième pointeau 160 sont donc agencés de façon coaxiale autour de l'axe X₁₁₂.

Dans la présente demande, les verbes « relier », « connecter », « raccorder » et « communiquer » se rapportent à une communication de fluide, c'est-à-dire à un lien qui permet à un fluide, gazeux ou liquide, de s'écouler ou de circuler entre deux ou plusieurs points ou pièces. Un tel lien peut être direct ou indirect, c'est-à-dire réalisé par un conduit, un tuyau, une canalisation etc. De même, les noms dérivés de ces verbes, tels que « connexion » et « raccordement » concernent une telle communication de fluide.

Près de l'ouverture amont 104.1, le corps 101 forme un premier siège 123 pour le premier pointeau 130. Plus précisément, le premier siège 123 est constitué d'une surface tronconique d'axe X₁₁₂ qui est ménagée dans le demi-corps amont 102 et qui converge vers l'axe X₁₁₂ quand on se rapproche de l'ouverture amont 104.1. Le premier embout amont 132 a une surface radiale externe 131 dont la forme tronconique est complémentaire à celle du siège 123. Quand le premier pointeau 130 est en position d'obturation, la surface radiale externe 131 appuie de façon étanche contre le siège 123. Le premier pointeau 130 obture ainsi le premier conduit 111.

Dans la présente demande, les adjectifs « radial » et « axial » sont employés par référence à l'orientation générale de l'élément qu'ils qualifient. Par exemple, une surface est qualifiée de « radiale » ou « d'axiale » selon qu'une normale à cette surface est orientée perpendiculairement ou parallèlement à l'axe X₁₁₂.

Dans la présente demande, les adjectifs « interne » et « externe » désignent respectivement un élément orienté vers l'axe X₁₁₂ et un élément orienté dans une direction opposée à l'axe X₁₁₂.

Le premier pointeau 130 forme un deuxième siège 136 pour le deuxième pointeau 160. Le siège 136 est formé par la surface radiale interne du deuxième embout amont 132, laquelle à une forme tronconique. Le deuxième pointeau 160 comporte un plateau terminal 166 situé à l'extrémité amont du deuxième embout amont 162.

Le plateau terminal 166 a une surface axiale terminale en forme de disque, qui obture une partie substantielle de l'ouverture amont 104.1. Le plateau terminal 166 présente aussi une surface radiale externe 161 dont la forme tronconique est complémentaire à celle du deuxième siège 136. Quand le deuxième pointeau 160 est en position d'obturation, la surface radiale externe 161 du deuxième embout amont 162 appuie de façon étanche contre le deuxième siège 136. Le deuxième pointeau 160 obture ainsi le deuxième conduit 112.

Le premier pointeau 130 et le deuxième pointeau 160 affleurent l'ouverture amont 104.1. Plus précisément, les surfaces axiales terminales respectives du premier embout amont 132 et du deuxième embout amont 162 affleurent une surface externe 104.2 du flasque amont 104. Cet agencement permet de minimiser l'encombrement de la vanne 100 et de réduire la consommation en produits de revêtement et de nettoyage

Le corps 101 définit le premier conduit 111 qui est usiné dans le demi-corps amont 102. Le premier conduit 111 s'étend de manière rectiligne selon un axe X₁₁₁. Une partie substantielle du deuxième conduit 112 est formée par une cavité interne 170 formée par un évidement borgne et cylindrique d'axe X₁₁₂ percé au sein du deuxième pointeau 160. Le deuxième conduit 112 s'étend donc essentiellement selon l'axe X₁₁₂. L'axe X₁₁₁ du premier conduit 111 est sensiblement transversal à l'axe X₁₁₂. L'adverbe « sensiblement » indique que l'axe X₁₁₁ et l'axe X₁₁₂ peuvent être disjoints c'est-à-dire non sécants. Dans le plan de la figure 1, l'axe X₁₁₁ et l'axe X₁₁₂ forment un angle A d'environ 70°.

Le premier pointeau 130 peut coulisser au sein du corps 101 et suivant une liaison pivot-glissant d'axe X₁₁₂. En pratique, la surface radiale externe du premier cylindre amont 133 à un diamètre D₁₃₃.₁ qui est légèrement inférieur au diamètre D₁₀₂ de la surface radiale interne et cylindrique du demi-corps amont 102. La différence entre le diamètre D_{133.1} et le diamètre D₁₀₂ correspond à un jeu fonctionnel autorisant le coulissement du premier cylindre amont 133 dans le demi-corps amont 102.

De même, le diamètre D₁₃₅ de la surface radiale externe du premier cylindre aval 135 est légèrement inférieur au diamètre D₁₀₅ de la surface radiale interne de la paroi cylindrique amont 105. La différence entre le diamètre D₁₀₅ et le diamètre D₁₃₅ correspond à un jeu fonctionnel qui autorise le coulissement du premier cylindre aval 135 dans la paroi cylindrique amont 105.

De façon analogue, le deuxième pointeau 160 peut coulisser au sein du premier pointeau 130 et du demi-corps aval 103, suivant une liaison pivot-glissant d'axe X₁₁₂. Dans ce but, le diamètre D₁₆₃ de la surface radiale externe du premier cylindre amont 163 est légèrement inférieur au diamètre D_{133.2} de la surface radiale interne du premier cylindre amont 133. La différence entre le diamètre D_{133.2} et le diamètre D₁₆₃ correspond à un jeu fonctionnel qui autorise le coulissement du premier cylindre amont 163 du deuxième pointeau 160 dans le premier cylindre amont 133 du premier pointeau 130.

De même, le diamètre D₁₆₄ de la surface radiale externe de la première couronne 164 est légèrement inférieur au diamètre D₁₄₀ de la surface radiale interne du logement 140, lequel est défini par la surface radiale interne du premier cylindre aval 135. La différence entre le diamètre D₁₆₄ et le diamètre D₁₄₀ correspond à un jeu fonctionnel qui autorise le coulissement de la première couronne 164 dans le logement 140. De plus, le diamètre D₁₆₅ de la surface radiale externe du premier cylindre aval 165 est légèrement inférieur au diamètre D₁₀₈ de la surface radiale interne d'une paroi interne 108 de forme cylindrique appartenant au demi-corps aval 103. La différence entre le diamètre D₁₀₈ et le diamètre D₁₆₅ correspond à un jeu fonctionnel qui autorise le coulissement du premier cylindre aval 165 dans la paroi interne 108.

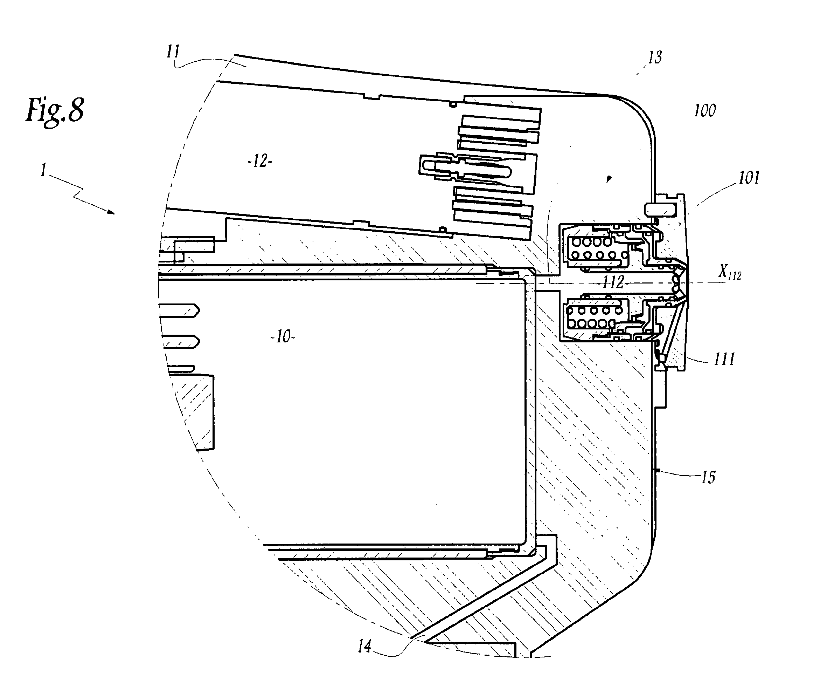

La figure 8 montre un projecteur 1 comportant un corps 11 logeant un réservoir 10, contenant le produit de revêtement, et une unité haute tension 12. Le projecteur 1 comporte une vanne 100 décrite ci-dessus en relation avec la figure 1. Un conduit de connexion 13 relie l'amont du réservoir 10 à l'ouverture amont 104.1 de la vanne 100. Le conduit de connexion 13 est partiellement formé par le deuxième conduit 112. L'aval du réservoir 10 est relié à un organe de pulvérisation non représenté par l'intermédiaire d'un conduit d'alimentation 14. Le corps 11 présente une surface externe 15 encadrant l'ouverture amont 104.1.

Comme le montre la figure 1, l'ouverture amont 104.1 est commune au premier conduit 111 et au deuxième conduit 112. Quand la vanne 100 est en configuration d'ouverture, la peinture et le solvant peuvent s'écouler successivement à travers l'ouverture amont 104.1 au cours des phases de nettoyage et de remplissage du réservoir 10 du projecteur 1. Le deuxième embout amont 162 du deuxième pointeau 160 présente des orifices 172 répartis autour de l'axe X₁₁₂. Par les orifices 172, les fluides, peinture, solvant et air comprimé, peuvent s'écouler depuis l'ouverture amont 104.1 vers la cavité interne 170, donc vers le deuxième conduit 112.

Le diamètre D₁₁₁ du premier conduit 111 est d'environ 3 mm, car il est destiné au passage de solvant et d'air comprimé pour effectuer le nettoyage des canalisations et de l'organe de projection du projecteur 1. Le diamètre D₁₁₂ du deuxième conduit 112, pris dans sa partie la plus étroite, est d'environ 8 mm, car il est destiné au passage de peinture. Ainsi, le premier conduit 111 et le deuxième conduit 112 sont agencés pour recevoir respectivement un premier type de fluide, tel qu'un produit de nettoyage, constitué par le solvant et par l'air comprimé, ou un deuxième type de fluide, tel qu'un produit de revêtement constitué par la peinture.

La vanne 100 a une longueur L₁₀₀, mesurée parallèlement à l'axe X₁₁₂, d'environ 49 mm. La vanne 100 a une largeur W₁₀₀, mesurée perpendiculairement à l'axe X₁₁₂, d'environ 44 mm. Ainsi, la vanne 100 représente un encombrement particulièrement réduit.

Cette compacité de la vanne 100 facilite l'accès aux autres composants du projecteur 1 lors des opérations de maintenance et elle limite les pertes de peinture et la consommation de solvant. De plus, cette compacité limite la perte de charges engendrées par la vanne 100 sur les écoulements de peinture et de solvant, ce qui améliore l'efficacité du nettoyage et augmente le débit de remplissage du réservoir 10, donc réduit la durée du changement de teinte de peinture.

Le premier pointeau 130 et le deuxième pointeau 160 présentent des surfaces de poussées 137 et 167 respectives, qui sont agencées de façon à transmettre respectivement des efforts de poussée F₁₃₇ et F₁₆₇ exercées par un fluide de poussée, en l'occurrence de l'air comprimé. L'air comprimé est introduit sur la première surface de poussée 137 par l'intermédiaire d'une première chambre de poussée 138 et d'un premier canal de poussée 139. L'air comprimé est amené sur la deuxième surface de poussée 167 par l'intermédiaire d'une deuxième chambre de poussée 168 et d'un deuxième canal de poussée 169, lequel est percé dans la paroi cylindrique amont 105 et communique avec la deuxième chambre de poussée 168 à travers le premier cylindre aval 135. Les surfaces de poussée 137 et 167 sont formées par les surfaces axiales amont respectives des couronnes 134 et 164.

Les efforts de poussée F₁₃₇ et F₁₆₇ se répartissent respectivement sur l'ensemble des surfaces de poussée 137 et 167. Les résultantes des efforts de poussée F₁₃₇ et F₁₆₇ sont exercées parallèlement à l'axe X₁₁₂, c'est-à-dire suivant la première direction de translation du premier pointeau 130 et suivant la deuxième direction de translation du deuxième pointeau 160.

Pour rappeler respectivement le premier pointeau 130 et le deuxième pointeau 160 dans leurs positions respectives d'obturation du premier conduit 111 et du deuxième conduit 112, la vanne 100 comprend en outre un premier ressort 191 et un deuxième ressort 192. Le premier ressort 191 et le deuxième ressort 192 constituent respectivement un premier organe élastique et un deuxième organe élastique pour rappeler le premier pointeau 130 et le deuxième pointeau 160 dans leurs positions respectives d'obturation du premier conduit 111 et du deuxième conduit 112. Le premier ressort 191 et le deuxième ressort 192 travaillent en compression respectivement à l'encontre des forces de poussée F₁₃₇ et F₁₆₇.

Les superficies des surfaces de poussée 137 et 167 sont déterminées en fonction de la pression disponible en fluide de poussée et des efforts de rappel exercés par le premier ressort 191 et par le deuxième ressort 192. Le premier ressort 191 et le deuxième ressort 192 sont dimensionnés en fonction des pressions d'alimentation en peinture et en solvant qui s'exercent sur leurs embouts amonts de type 132. Ces pressions d'alimentation sont définies pour l'installation de peinture où la vanne 100 est mise en oeuvre.

Le premier ressort 191 est un ressort à fil hélicoïdal conventionnel. Alternativement, il peut être un ressort multispire crête-à-crête. Pour une même longueur à vide, un ressort multispire crête-à-crête offre une raideur supérieure à celle qu'offre un ressort à fil hélicoïdal conventionnel. Le premier ressort 191 est encadré latéralement par la paroi cylindrique aval 107 et par une paroi interne 108appartenant au demi-corps aval 103. Le premier ressort 191 est en appui d'une part sur le flasque aval 106 et, d'autre part sur une surface axiale amont du premier cylindre aval 135.

Le deuxième ressort 192 est un ressort à fil hélicoïdal conventionnel. Le deuxième ressort 192 est encadré latéralement par la paroi cylindrique aval 107 et par la paroi interne 108. Le deuxième ressort 192 est monté en appui d'une part sur le flasque aval 106 et d'autre part sur une surface axiale amont de la première couronne 164.

La vanne 100 comporte en outre plusieurs zones d'étanchéité, qui sont agencés entre ses divers composants pour réaliser leur étanchéité vis-à-vis des fluides s'écoulant dans la vanne 100 que sont la peinture, le solvant et l'air comprimé. L'étanchéité du premier pointeau 130 et du deuxième pointeau 160 est réalisée par des joints toriques portant contre des surfaces radiales, ce qui augmente la compacité axiale de la vanne 100. Ces surfaces radiales correspondent aux portions cylindriques du premier pointeau 130 et du deuxième pointeau 160. La réalisation de l'étanchéité sur des surfaces radiales et non axiales permet de limiter la rétention de fluides en éliminant des zones « mortes ».

La figure 2 montre une vanne 200 conforme à un deuxième mode de réalisation de l'invention. La description de la vanne 100 donnée ci-dessus peut être transposée à la vanne 200, à l'exception des différences notables mentionnées ci-après. Un élément de la vanne 200 identique ou correspondant à un élément de la vanne 100 porte la même référence numérique augmentée de 100.

On définit ainsi la vanne 200, un corps 201, un demi-corps amont 202, un demi-corps aval 203, un flasque amont 204, une ouverture amont 204.1, une paroi cylindrique amont 205, un flasque aval 206, une ouverture aval 206.1, une paroi cylindrique aval 207, un premier conduit 211 d'axe X₂₁₁ et de diamètre D₂₁₁, un deuxième conduit 212 d'axe X₂₁₂ et de diamètre D₂₁₂, un premier siège 223, un premier pointeau 230 avec un premier embout amont 232, un premier cylindre amont 233, une première couronne 234, un premier cylindre aval 235, un deuxième siège 236, une première surface de poussée 237, une première chambre de poussée 238, un logement 240, un deuxième pointeau 260 avec un deuxième embout amont 262, un deuxième cylindre amont 263, une deuxième couronne 264, un deuxième cylindre aval 265, un plateau terminal 266, une deuxième surface de poussée 267, une deuxième chambre de poussée 268, une cavité interne 270, un premier ressort 291, un deuxième ressort 292.

La vanne 200 diffère de la vanne 100 essentiellement par les fonctions de ses premier et deuxième conduits, c'est-à-dire par la géométrie et les dimensions du premier conduit 211 et du deuxième conduit 212. Le premier conduit 211 et le deuxième conduit 212 s'étendent respectivement suivant un axe X₂₁₁ et un axe X₂₁₂ qui sont perpendiculaires, c'est-à-dire qu'ils forment entre eux un angle de 90° dans le plan de la figure 2. La vanne 200 est plus compacte que la vanne 100, car la longueur de la vanne 200 est de 43 mm et sa largeur de 36 mm.

Le diamètre D₂₁₁ du premier conduit 211 est d'environ 8 mm, car il est plutôt destiné au passage de peinture. Le diamètre D₂₁₂ du deuxième conduit 212, pris dans sa partie la plus étroite, est d'environ 3 mm, car il est destiné au passage de solvant et d'air comprimé pour effectuer le nettoyage des canalisations et de l'organe de projection du projecteur 1. Ainsi, le deuxième conduit 212 et le premier conduit 211 sont agencés pour recevoir respectivement un premier type de fluide, tel qu'un produit de nettoyage, constitué par le solvant et par l'air comprimé, ou un deuxième type de fluide, tel qu'un produit de revêtement constitué par la peinture.

En outre, le premier embout amont 262 du deuxième pointeau 260 présente une forme globalement cylindrique, à la différence du deuxième embout amont 162 de la vanne 100 qui a une forme tronconique.

De plus, l'embout 232 du premier pointeau 230 et l'embout 262 du deuxième pointeau 260 présentent des surfaces mouillées sensiblement tangentes localement aux lignes de courant des fluides, de façon à limiter la rétention de fluide.

Dans ce but, par exemple, la vanne 200 présente un évidement 232.1 en forme de demi-tore, lequel est localement tangent aux lignes de courant L₂₁₁, comme le montre la figure 5. Les formes tronconiques des premier 132 et deuxième 162 embouts amont sont également tangentes localement aux lignes de courant des fluides, ce qui permet de limiter la rétention de fluide et d'améliorer le rinçage des surfaces salies.

Par ailleurs, la vanne 200 présente d'autres différences structurelles avec la vanne 100. Dans la mesure où ces différences structurelles n'impliquent pas de différences fonctionnelles entre les vannes 100 et 200, elles ne seront pas énoncées dans la présente demande.

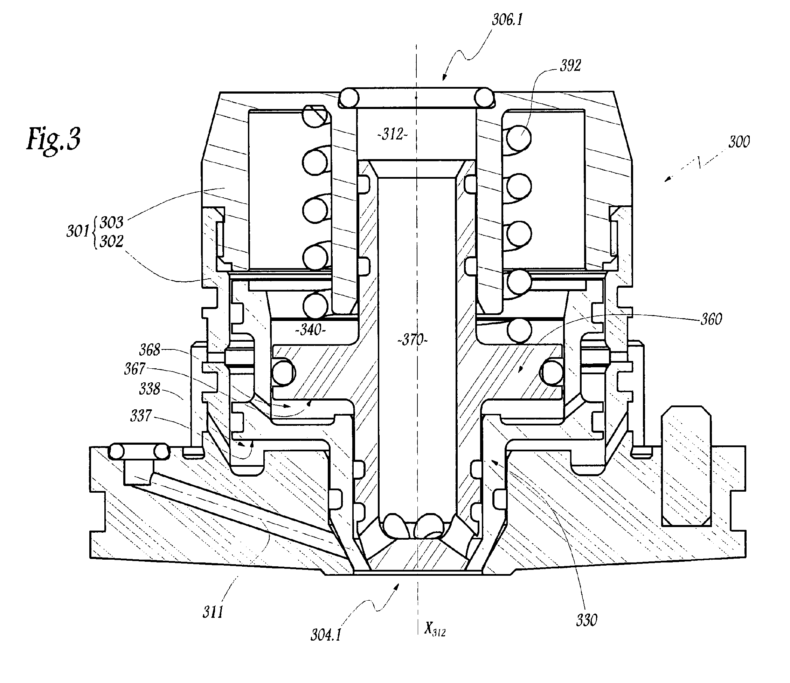

La figure 3 montre une vanne 300 conforme à un troisième mode de réalisation de l'invention et sensiblement identique à la vanne 100 décrite ci-dessus en relation avec la figure 1. La description de la vanne 100 donnée ci-dessus peut être transposée directement à la vanne 300, à l'exception des différences notables mentionnées ci-après. Un élément de la vanne 300 identique ou correspondant à un élément de la vanne 100 porte la même référence numérique augmentée de 200.

On définit ainsi la vanne 300, un corps 301, un demi-corps amont 302, un demi-corps aval 303, une ouverture amont 304.1, une ouverture aval 306.1, un premier conduit 311, un deuxième conduit 312 d'axe X₃₁₂, un premier pointeau 330 avec une première surface de poussée 337 et une chambre première de poussée 338, un logement 340, un deuxième pointeau 360 avec une deuxième surface de poussée 367 et une deuxième chambre de poussée 368 ainsi qu'une cavité interne 370.

La vanne 300 diffère de la vanne 100 essentiellement en ce qu'elle comporte un seul ressort 392, analogue au deuxième ressort 192. Le ressort 392 constitue un organe élastique pour rappeler le premier pointeau 330 et le deuxième pointeau 360 dans leurs positions respectives d'obturation du premier conduit 311 et du deuxième conduit 312.

Pour maintenir le deuxième pointeau 360 ouvert, lors de l'ouverture du premier pointeau 330, la pression régnant dans la deuxième chambre de poussée 368 doit être supérieure à la pression régnant dans la première chambre de poussée 338.

Le montage d'un seul ressort 392, au lieu des deux ressorts 191 et 192, permet de réduire les coûts de fabrication et d'augmenter la compacité de la vanne 300.

Le fonctionnement de la vanne 300 est illustré par les figures 6 et 7. Le fonctionnement de la vanne 100 est sensiblement identique au fonctionnement de la vanne 300 décrit ci-après. Pour effectuer la phase de nettoyage, la vanne 300 est placée dans une première configuration d'ouverture illustrée par la figure 6. Le premier conduit 311 et le deuxième conduit 312 sont ouverts suite au coulissement du premier pointeau 330 et du deuxième pointeau 360 sous l'effet des poussées exercées sur les surfaces de poussée 337 et 367. Le solvant s'écoule alors dans le premier conduit 311 et dans le deuxième conduit 312, ce qui nettoie ces conduits et tous les éléments aval. L'écoulement de solvant est symbolisé par les lignes de courant L₃₁₁ et L₃₁₂.

Pour effectuer la phase de remplissage, la vanne 300 est placée dans une deuxième configuration d'ouverture illustrée par la figure 7. Le premier conduit 311 est obturé par le premier pointeau 330, tandis que le deuxième conduit 312 est ouvert en déplaçant le deuxième pointeau 360. La peinture s'écoule alors dans le deuxième conduit 312 vers le réservoir 10. L'écoulement de peinture est symbolisé par la ligne de courant L₃₁₂. Aucun fluide ne s'écoule dans le premier conduit 211.

Dans une troisième configuration d'ouverture de la vanne 300, non représentée, le premier conduit 211 est ouvert, tandis que le deuxième conduit 212 est fermé.

Le fonctionnement de la vanne 200 est illustré par les figures 4 et 5. Pour effectuer la phase de nettoyage, la vanne 200 est placée dans une première configuration d'ouverture illustrée par la figure 4. Le premier conduit 211 et le deuxième conduit 212 sont ouverts suite au coulissement du premier pointeau 230 et du deuxième pointeau 260 sous l'effet des poussées exercées sur les surfaces de poussée 237 et 267. Le solvant s'écoule alors dans le premier conduit 211 et dans le deuxième conduit 212, ce qui nettoie ces conduits et tous les éléments aval. L'écoulement de solvant est symbolisé par les lignes de courant L₂₁₁ et L₂₁₂.

Pour effectuer la phase de remplissage, la vanne 200 est placée dans une deuxième configuration d'ouverture illustrée par la figure 5. Le premier conduit 211 est ouvert en déplaçant le premier pointeau 230, tandis que le deuxième conduit 212 est obturé par le deuxième pointeau 260. La peinture s'écoule alors dans le premier conduit 211 vers le réservoir 10. L'écoulement de peinture est symbolisé par la ligne de courant L₂₁₁. Aucun fluide ne s'écoule dans le deuxième conduit 212.

Dans une troisième configuration d'ouverture de la vanne 200, non représentée, le premier conduit 211 est fermé, tandis que le deuxième conduit 212 est ouvert.

Outre sa compacité élevée, une vanne conforme à l'invention évite une construction hyperstatique nécessitée, dans l'art antérieur, par la réalisation de zones d'étanchéité simultanée pour deux conduits voisins.

Selon une variante non représentée, la première direction de translation du premier pointeau est parallèle, sans être colinéaire, à la deuxième direction de translation du deuxième pointeau.

Selon une autre variante non représentée, l'assemblage des demi-corps amont et aval par fixation mutuelle résulte d'un clipsage de la paroi cylindrique amont sur la paroi cylindrique aval, au lieu d'un vissage comme dans le cas des vannes 100, 200 et 300. Le jeu de montage résultant de ce clipsage est compensé par le deuxième ressort, car le deuxième ressort travaille en compression et repousse d'une part le demi-corps aval et d'autre part le demi-corps amont, via le premier pointeau.

## Revendications

1. Vanne (100 ; 200 ; 300) comprenant :
- un corps (101 ; 201 ; 301) ;
- au moins un premier conduit (111 ; 211 ; 311) pour canaliser l'écoulement d'un fluide ;
- au moins un deuxième conduit (112 ; 212 ; 312) pour canaliser l'écoulement d'un fluide ;
- un premier pointeau (130 ; 230 ; 330) mobile en translation, suivant une première direction (X₁₁₂ ; X₂₁₂; X₃₁₂), entre une position d'ouverture et une position d'obturation du ou de chaque premier conduit (111 ; 211 ; 311), le corps (101 ; 201 ; 301) formant un premier siège (123 ; 223) pour le premier pointeau (130 ; 230 ; 330) ; et
- un deuxième pointeau (160 ; 260 ; 360) mobile en translation, suivant une deuxième direction (X₁₁₂ ; X₂₁₂; X₃₁₂), entre une position d'ouverture et une position d'obturation du ou de chaque deuxième conduit (112 ; 212 ; 312) ;
la première direction (X₁₁₂ ; X₂₁₂; X₃₁₂) et la deuxième direction (X₁₁₂ ; X₂₁₂ ; X₃₁₂) étant parallèles ou confondues, alors que le premier pointeau (130 ; 230 ; 330) définit un logement (140 ; 240 ; 340) pour le deuxième pointeau (160 ; 260 ; 360), que le premier pointeau (130 ; 230 ; 330) forme un deuxième siège (136 ; 236) pour le deuxième pointeau (160 ; 260 ; 360), et que le corps (101 ; 201 ; 301) définit le premier conduit (111 ; 211 ; 311) et que le deuxième pointeau (160 ; 260; 360) présente une cavité interne (170 ; 270) qui forme une partie du deuxième conduit (112 ; 212 ; 312)
la vanne (100 ; 200 ; 300) étant **caractérisée en ce que** :
- le corps (101 ; 201 ; 301) présente une ouverture (104.1 ; 204.1) commune au premier conduit (111 ; 211 ; 311) et au deuxième conduit (112 ; 212 ; 312) et
- les surfaces axiales terminales respectives du premier pointeau (130 ; 230 ; 330) et du deuxième pointeau (160 ; 260 ; 360) affleurent ladite ouverture (104.1).

2. Vanne (100 ; 200 ; 300) selon la revendication 1, **caractérisée en ce que** le premier pointeau (130 ; 230 ; 330) et le deuxième pointeau (160 ; 260) présentent chacun une symétrie de révolution respectivement autour de la première direction (X₁₁₂ ; X₂₁₂ ; X₃₁₂) et de la deuxième direction (X₁₁₂ ; X₂₁₂ X₃₁₂) et **en ce que** le premier pointeau (130 ; 230 ; 330) et le deuxième pointeau (160 ; 260 ; 360) sont agencés de façon coaxiale.

3. Vanne (100 ; 200 ; 300) selon l'une des revendications précédentes, **caractérisée en ce qu'**elle comprend en outre au moins un organe élastique (191, 192 ; 291, 292 ; 392) pour rappeler le premier pointeau (130 ; 230 ; 330) et le deuxième pointeau (160 ; 260 ; 360) dans leurs positions respectives d'obturation du premier conduit (111 ; 211 ; 311) et du deuxième conduit (112 ; 212 ; 312) et **en ce que** le premier pointeau (130 ; 230 ; 330) et le deuxième pointeau (160 ; 260 ; 360) présentent respectivement des surfaces de poussée (137, 167 ; 237, 267) agencées de façon à transmettre des efforts de poussée (F₁₃₇, F₁₆₇) exercés par un fluide de poussée, tel que de l'air comprimé, suivant la première direction (X₁₁₂ ; X₂₁₂ ; X₃₁₂) ou la deuxième direction (X₁₁₂ ; X₂₁₂ ; X₃₁₂) à l'encontre de l'organe élastique (191, 192 ; 291, 292 ; 392).

4. Vanne selon la revendication 3, **caractérisée en ce qu'**au moins un organe élastique est formé par un ressort multispire crête-à-crête.

5. Vanne (100 ; 200 ; 300) selon l'une des revendications précédentes, **caractérisée en ce que** le premier conduit (111 ; 211 ; 311) s'étend sensiblement transversalement au deuxième conduit (112 ; 212 ; 312).

6. Vanne (100 ; 200 ; 300) selon l'une des revendications précédentes, **caractérisée en ce que** le premier conduit (111 ; 211 ; 311) et le deuxième conduit (112 ; 212 ; 312) sont agencés pour recevoir un premier type de fluide, tel qu'un produit de nettoyage, ou un deuxième type de fluide, tel qu'un produit de revêtement.

7. Vanne (100 ; 200 ; 300) selon l'une des revendications précédentes, **caractérisée en ce que** le premier siège (123 ; 223) et le deuxième siège (136 ; 236) ont des formes tronconiques.

8. Vanne (100 ; 200 ; 300) selon l'une des revendications précédentes, **caractérisée en ce que** le premier pointeau (130 ; 230 ; 330) et le deuxième pointeau (160 ; 260 ; 360) présentent des surfaces mouillées (232.1) sensiblement tangentes localement aux lignes de courant des fluides (L₁₁₁, L₁₁₂ ; L₂₁₁, L₂₁₂ ; L₃₁₁, L₃₁₂), de façon à limiter la rétention de fluide.

9. Vanne (100 ; 200 ; 300) selon l'une des revendications précédentes, **caractérisée en ce que** les première et deuxième directions (X₁₁₂ ; X₂₁₂ ; X₃₁₂) sont colinéaires et confondues.

10. Projecteur (1) de produit de revêtement **caractérisé en ce qu'**il comprend une vanne (100; 200; 300) selon l'une des revendications précédentes.

## Claims

1. A valve (100; 200; 300) comprising:
· a body (101; 201; 301);
· at least one first duct (111; 211; 311) for channeling the flow of a fluid;
· at least one second duct (112; 212; 312) for channeling the flow of a fluid;
· a first needle (130; 230; 330) mounted to move in translation, in a first direction (X₁₁₂; X₂₁₂; X₃₁₂) , between an open position and a closed position for opening and closing the or each first duct (111; 211; 311), the body (101; 201; 301) forming a first seat (123; 223) for the first needle (130; 230; 330); and
· a second needle (160; 260; 360) mounted to move in translation, in a second direction (X₁₁₂; X₂₁₂; X₃₁₂), between an open position and a closed position for opening and closing the or each second duct (112; 212; 312);
where the first direction (X₁₁₂; X₂₁₂; X₃₁₂) and the second direction (X₁₁₂; X₂₁₂; X₃₁₂) are parallel or coincide, the first needle (130; 230; 330) defines a recess (140; 240; 340) for receiving the second needle (160; 260; 360), the first needle (130; 230; 330) forms a second seat (136; 236) for the second needle (160; 260; 360) and the body (101; 201; 301) defines the first duct (111; 211; 311), and in that the second needle (160; 260; 360) has an internal cavity (170; 270) forming a portion of the second duct (112; 212; 312) the valve (100; 200; 300) being **characterized in that**:
- the body (101; 201; 301) has an opening (104.1; 204.1) common to the first duct (111; 211; 311) and to the second duct (112; 212; 312) and
- the respective terminal axial surfaces of the first needle (130; 230; 330) and of the second needle (160; 260; 360) come flush with said opening (104.1).

2. A valve (100; 200; 300) according to claim 1, **characterized in that** the first needle (130; 230; 330) and the second needle (160; 260) are circularly symmetrical respectively about the first direction (X₁₁₂; X₂₁₂; X₃₁₂) and about the second direction (X₂₁₂; X₂₁₂; X₃₁₂), and **in that** the first needle (130; 230; 330) and the second needle (160; 260; 360) are arranged coaxially.

3. A valve (100; 200; 300) according to any preceding claim, **characterized in that** it further comprises at least one resilient member (191, 192; 291; 292; 392) for urging the first needle (130; 230; 330) and the second needle (160; 260; 360) back into their respective closed positions in which they close the first duct (111; 211; 311) and the second duct (112; 212; 312), and **in that** the first needle (130; 230; 330) and the second needle (160; 260; 360) have respective thrust surfaces (137; 167; 237, 267) arranged in such a manner as to transmit thrust forces (F₁₃₇, F₁₆₇) exerted by a thrust fluid, such as compressed air, in the first direction (X_{112;} X₂₁₂; X₃₁₂) or in the second direction (X₁₁₂; X₂₁₂; X₃₁₂) in opposition to the resilient member (191, 192; 291, 292; 392).

4. A valve according to claim 3, **characterized in that** at least one resilient member is formed by a crest-to-crest multi-turn spring.

5. A valve (100; 200; 300) according to any preceding claim, **characterized in that** the first duct (111; 211; 311) extends substantially transversely to the second duct (112; 212; 312).

6. A valve (100; 200; 300) according to any preceding claim, **characterized in that** the first duct (111; 211; 311) and the second duct (112; 212; 312) are arranged to receive a first type of fluid, such as a cleaning material, or a second type of fluid, such as a coating material.

7. A valve (100; 200; 300) according to any preceding claim, **characterized in that** the first seat (123; 223) and the second seat (136; 236) are frustoconical in shape.

8. A valve (100; 200; 300) according to any preceding claim, **characterized in that** the first needle (130; 230; 330) and the second needle (160; 260; 360) present wetted surfaces (232.1) that are substantially locally tangential to the lines of flow of the fluids (L₁₁₁, L₁₁₂; L₂₁₁, L₂₁₂; L₃₁₁, L₃₁₂) , in such a manner as to limit fluid retention.

9. A valve (100; 200; 300) according to any preceding claim, **characterized in that** the first and the second directions (X112; X212; X312) are co-linear and coincide.

10. An atomizer (1) for spraying coating material, said atomizer being **characterized in that** it includes a valve (100; 200; 300) according to any preceding claim.

## Patentansprüche

1. Ventil (100; 200; 300), umfassend:
- einen Körper (101; 201; 301);
- mindestens eine erste Leitung (111; 211; 311), um den Strom eines Fluids zu leiten;
- mindestens eine zweite Leitung (112; 212; 312), um den Strom eines Fluids zu leiten;
- eine erste Düsennadel (130; 230; 330), die in einer ersten Richtung (X₁₁₂; X₂₁₂; X₃₁₂) zwischen einer Öffnungsstellung und einer Verschlussstellung der oder jeder ersten Leitung (111; 211; 311) verschiebbar ist, wobei der Körper (101; 201; 301) einen ersten Sitz (123; 223) für die erste Düsennadel (130; 230; 330) bildet;
und
- eine zweite Düsennadel (160; 260; 360), die in einer zweiten Richtung (X₁₁₂; X₂₁₂; X₃₁₂) zwischen einer Öffnungsstellung und einer Verschlussstellung der oder jeder zweiten Leitung (112; 212; 312) verschiebbar ist;
wobei die erste Richtung (X₁₁₂; X₂₁₂; X₃₁₂) und die zweite Richtung (X_{112;} X₂₁₂; X₃₁₂) parallel oder kombiniert sind, während die erste Düsennadel (130; 230; 330) eine Aufnahme (140; 240; 340) für die zweite Düsennadel (160; 260; 360) definiert, die erste Düsennadel (130; 230; 330) einen zweiten Sitz (136; 236) für die zweite Düsennadel (160; 260; 360) bildet und der Körper (101; 201; 301) die erste Leitung (111; 211; 311) definiert und die zweite Düsennadel (160; 260; 360) einen inneren Hohlraum (170; 270) aufweist, der einen Teil der zweiten Leitung (112; 212; 312) bildet,
wobei das Ventil (100; 200; 300) **dadurch gekennzeichnet ist, dass**:
- der Körper (101; 201; 301) eine Öffnung (104.1; 204.1) aufweist, der der ersten Leitung (111; 211; 311) und der zweiten Leitung (112; 212; 312) gemein ist, und
- die jeweiligen axialen Endflächen der ersten Düsennadel (130; 230; 330) und der zweiten Düsennadel (160; 260; 360) mit der Öffnung (104.1) bündig werden.

2. Ventil (100; 200; 300) nach Anspruch 1, **dadurch gekennzeichnet, dass** die erste Düsennadel (130; 230; 330) und die zweite Düsennadel (160; 260) jeweils eine Rotationssymmetrie um die erste Richtung (X₁₁₂; X₂₁₂; X₃₁₂) bzw. die zweite Richtung (X₁₁₂; X₂₁₂; X₃₁₂) herum aufweisen und dass die erste Düsennadel (130; 230; 330) und die zweite Düsennadel (160; 260; 360) koaxial angeordnet sind.

3. Ventil (100; 200; 300) nach einem der vorhergehenden Ansprüche, **dadurch gekennzeichnet, dass** es außerdem ein federndes Element (191, 192; 291, 292; 392) umfasst, um die erste Düsennadel (130; 230; 330) und die zweite Düsennadel (160; 260; 360) in ihre jeweiligen Verschlussstellungen der ersten Leitung (111; 211; 311) und der zweiten Leitung (112; 212; 312) zurückzuziehen, und dass die erste Düsennadel (130; 230; 330) und die zweite Düsennadel (160; 260; 360) jeweils Schubflächen (137, 167; 237, 267) aufweisen, die derart angeordnet sind, dass Schubkräfte (F₁₃₇, F₁₆₇), die von einem Schubfluid, wie Druckluft, ausgeübt werden, gemäß der ersten Richtung (X₁₁₂; X₂₁₂; X₃₁₂) oder der zweiten Richtung (X_{121;} X₂₁₂; X₃₁₂) gegen das federnde Element (191, 192; 291, 292; 392) übertragen werden.

4. Ventil nach Anspruch 3, **dadurch gekennzeichnet, dass** mindestens ein federndes Element von einer Spitze-zu-Spitze-Multispiralfeder gebildet wird.

5. Ventil (100; 200; 300) nach einem der vorhergehenden Ansprüche,
**dadurch gekennzeichnet, dass** die erste Leitung (111; 211; 311) sich im Wesentlichen quer zu der zweiten Leitung (112; 212; 312) erstreckt.

6. Ventil (100; 200; 300) nach einem der vorhergehenden Ansprüche,
**dadurch gekennzeichnet, dass** die erste Leitung (111; 211; 311) und die zweite Leitung (112; 212; 312) dazu angeordnet sind, eine erste Fluidart, wie ein Reinigungsmittel, oder eine zweite Fluidart, wie ein Beschichtungsmittel, aufzunehmen.

7. Ventil (100; 200; 300) nach einem der vorhergehenden Ansprüche, **dadurch gekennzeichnet, dass** der erste Sitz (123; 223) und der zweite Sitz (136; 236) kegelstumpfförmig sind.

8. Ventil (100; 200; 300) nach einem der vorhergehenden Ansprüche, **dadurch gekennzeichnet, dass** die erste Düsennadel (130; 230; 330) und die zweite Düsennadel (160; 260; 360) benetzte Flächen (232.1) aufweisen, die im Wesentlichen die Leitungen des Stroms von Fluida (L₁₁₁, L₁₁₂; L₂₁₁, L₂₁₂; L₃₁₁, L₃₁₂) lokal tangieren, um die Fluidretention zu begrenzen.

9. Ventil (100; 200; 300) nach einem der vorhergehenden Ansprüche, **dadurch gekennzeichnet, dass** die erste und die zweite Richtung (X₁₁₂; X₂₁₂; X₃₁₂) kollinear und kombiniert sind.

10. Strahler (1) für Beschichtungsmittel, **dadurch gekennzeichnet, dass** er ein Ventil (100; 200; 300) nach einem der vorhergehenden Ansprüche umfasst.
